# EUROPEAN PATENT SPECIFICATION

(11) **EP 0 343 918 B1**
(45) Date of publication and mention of the grant of the patent: **09.04.1997**
(21) Application number: 89305191.2
(22) Date of filing: 23.05.1989
(51) Int. Cl.: G06F 17/30

(54) **A relational data retrieval apparatus**
Relationale Datenwiederauffindungsvorrichtung
Dispositif relationnel de recherche de données

(30) Priority: 25.05.1988 JP 127412/88
(43) Date of publication of application: 29.11.1989
(73) Proprietor: KABUSHIKI KAISHA TOSHIBA, Kawasaki-shi, Kanagawa-ken 210 (JP)
(72) Inventor: Morimoto, Yojiro, 1-1 Shibaura, 1-chome Minato-ku Tokyo (JP); Sekiguchi, Kouichi, 1-1 Shibaura, 1-chome Minato-ku Tokyo (JP); Muranaga, Miho, 1-1 Shibaura, 1-chome Minato-ku Tokyo (JP); Yamashita, Yoshikazu, 1-1 Shibaura, 1-chome Minato-ku Tokyo (JP)
(74) Representative: BATCHELLOR, KIRK & CO.

(56) References cited:
- RESEARCH DISCLOSURE, RD251002 10 March 1985, HAVANT GB 'Relational database for index in hierarchical library'

## Description

This invention relates to a data retrieval apparatus using a data base that stores various data, and more particularly to a relational data retrieval apparatus that can output not only data corresponding to designated keywords, but also other relational data related to such data.

A data retrieval apparatus, which can obtain necessary data using a data base that stores various data, has been widely applied. In such an apparatus, an essential word normally is selected as a keyword from words that constitute a data item. This keyword is stored in a data base separate from other words. In some cases, not only a single keyword, but plural keywords may also be given to a data item. Therefore, when such a single keyword is designated, an item corresponding to the designated keyword can be output. On the other hand, when a combination of plural keywords is designated, an item which satisfies the condition in which plural designated keywords are combined, can be output.

In recent years, a portable data base used for storing memoranda, such as personal information data and the like has been developed. Such a portable data base is generally called an electronic pocket-sized notebook. In the data base of this type, various non-uniform data are input in fragments one after another.

For example, a first item has a content which, for example, represents "Mr. A works for the company X." In this case, "A" and "X" are defined as keywords of the first item. The keywords "A" and "X" are respectively stored in a data base. A second item has a content which, for example, represents "The phone number of the company X is MMM-NNNN." In this case, "X" is defined as a keyword of the second item. The keyword "X" is stored in the same data base.

Now assume that the user of this apparatus requires information on "the phone number of Mr. A." If the keyword "A" is used to retrieve such information from the data base, only the content of the first item, i.e., "Mr. A works for the company X" is displayed. Namely, the required information cannot be immediately obtained. Here, observing the display, the user recognises that the first item has the keyword "X" besides the keyword "A". Then, the user executes data retrieval using the keyword "X". As a result, the content of the second item i.e., "The phone number of the company X is MMM-NNNN", is displayed. As described above, the user cannot directly obtain in one step the necessary information on the phone number of Mr. A. This means that the user must execute data retrieval twice. Specifically, in order to retrieve "the phone number of Mr. A", the user must execute a second retrieval using the first retrieval result. Therefore, the apparatus of this type cannot retrieve all the required data on its first retrieval. Namely, the procedures of data retrieval must be frequently repeated after checking previous retrieval results. Thus, it is difficult to extract all the relational data completely.

In the case of a relational data base, i.e., when data are stored in tabulated form, relational data can be retrieved relatively easily. However, in this case, both itemising relational data and inputting such data require cumbersome and time-consuming procedures.

As described above, in the conventional data retrieval apparatus, it is substantially impossible to extract all the relational data in one step using only a single keyword. If an attempt is made to retrieve all the relational data, cumbersome and time-consuming operations must be performed.

### SUMMARY OF THE INVENTION

Accordingly, one object of the present invention is to provide a relational data retrieval apparatus. The apparatus can naturally retrieve data on the basis of designated keywords. In addition, the apparatus can broadly retrieve even relational data including no designated keywords. Moreover, the apparatus can extract all the required relational data completely on its first retrieval.

Briefly, in accordance with one aspect of the present invention, there is provided a relational data retrieval apparatus, comprising data storing means for storing a plurality of data items and keywords corresponding to each item, wherein at least one item has a prescribed relationship to another item and plural keywords correspond to the at least one item, input means for entering a first keyword corresponding to a first item which a user wishes to retrieve, data retrieval means for retrieving the first item from the plurality of data stored in said data storing means in accordance with the first keyword, characterised by, flag memory means for storing a flag corresponding to each item stored in said data storing means, in which the flag is changed from a first state to a second state when the corresponding item is retrieved by said data retrieval means, keyword extracting means for extracting a second keyword contained in the said first item retrieved by said data retrieval means, the data retrieval means being arranged to retrieve a further item stored in said data storing means in accordance with the second keyword, the corresponding flag then being changed from the first to the second state, and display means for displaying all the data items whose respective flags have been set into the second state.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIGURE 1 is a perspective view illustrating an external appearance of one embodiment according to the present invention;
FIGURE 2 is a block diagram illustrating a configuration of one embodiment according to the present invention;
FIGURE 3a is a diagram illustrating a configuration of a data base stored in the data-storing unit of FIGURE 2;
FIGURE 3b is a diagram illustrating the changes in flag adding within the flag memory of FIGURE 2; and
FIGURE 4 is a flow chart illustrating the operations of one embodiment according to the present invention.

### DESCRIPTION OF THE PREFERRED EMBODIMENTS

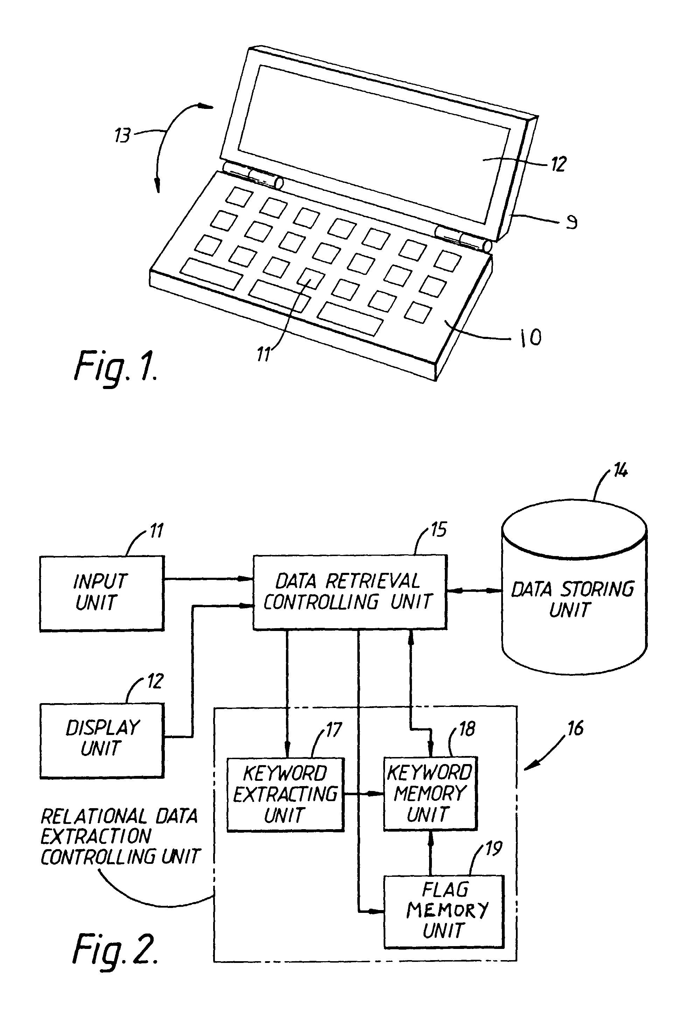

Referring now to the drawings, wherein like reference numerals designate indentical or corresponding parts throughout the several views, and more particularly to FIGURE 1 thereof, one embodiment of this invention will be described.

FIGURE 1 shows an external appearance of a relational data retrieval apparatus of one embodiment according to the present invention. The apparatus is generally called an electronic notebook, which is pocket-sized and convenient for portable use. The apparatus can be opened and closed in the direction of the arrow 13. Specifically, when not in use, the apparatus can be folded into a box-like form convenient for carrying. When in use, the apparatus can be opened, as shown in FIGURE 1.

An input unit 11 comprises a plurality of keyswitches. The keyswitches include a keyword-locating keyswitch and a keyword-registering keyswitch. However, the input unit 11 may also be comprised of other input devices such as a handwriting recognition device. A display unit 12 comprises an LCD (liquid crystal display). However, the display unit 12 may also be comprised of other light-emitting elements. Further, electronic components such as semiconductor integrated circuits and interconnecting wiring leads are incorporated in a casing 10. The input unit 11 is provided in the casing 10, and the display unit 12 is provided in a casing 9.

FIGURE 2 is a block diagram illustrating a configuration of a relational data retrieval apparatus according to one embodiment of the present invention. The apparatus comprises an input unit 11, a data-storing unit 14, a data retrieval-controlling unit 15, a relational data extraction-controlling unit 16 and a display unit 12.

The input unit 11 inputs data and keywords associated therewith. Further, the unit 11 inputs commands for designating keywords of data to be retrieved, and for executing such retrieval. The data-storing unit 14 is a data base that stores the data input by means of the input unit 11. The unit 14 stores such data on the basis of keywords.

The registration of keywords is performed as follows. Specifically, the particular words to be registered as keywords are selected from the words that constitute the input data. Such word selection is achieved by moving a contrasting display to the particular words by use of the keyword-locating keyswitch. Thereafter, the keyword-registering keyswitch is depressed. Other displays, such as a cursor or a flashing character may also be used. The data-storing unit 14 comprises a semiconductor memory device, a magnetic disk recording device or the like.

The data retrieval-controlling unit 15 retrieves data from the data-storing units 14. Such data are designated on the basis of Keywords which are supplied from the relational data extraction-controlling unit 16. Further, the unit 15 executes procedures for adding flags to such data.

The relational data extraction-controlling unit 16 supplies the data retrieval-controlling unit 15 with keywords as follows. Specifically, keywords are input by the input unit 11, and relational keywords are extracted from the data which have been retrieved by the unit 15. As a result, the relational data extraction-controlling unit 16 can control the extent of data retrieval. The unit 16 comprises a keyword-extracting unit 17, a keyword memory 18 and a flag memory 19. The keyword memory 18 stores keywords extracted by the keyword-extracting unit 17. The display unit 12 displays the data retrieved by the data retrieval-controlling unit 15.

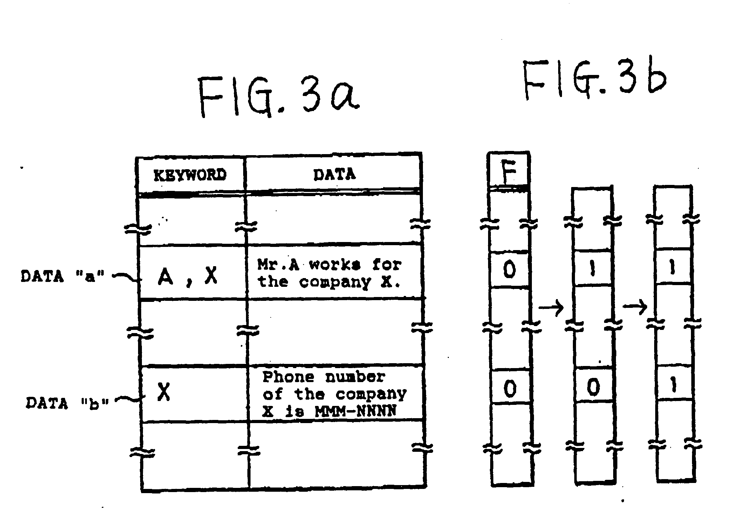

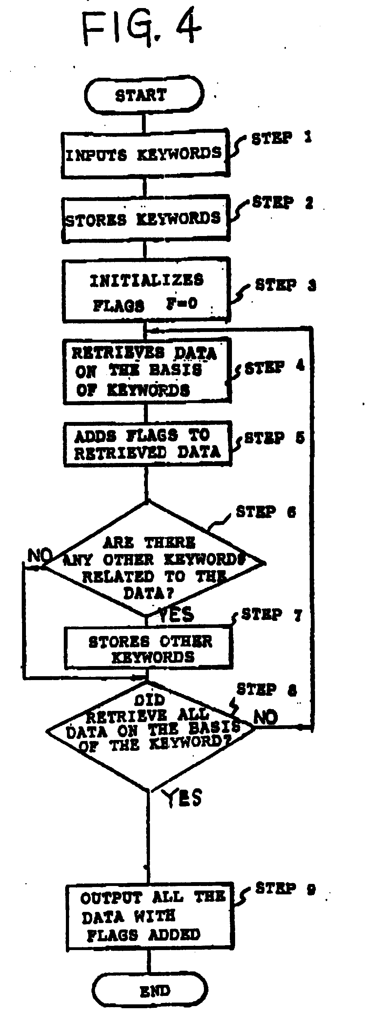

Next, the operations of the above-described data retrieval apparatus of this embodiment according to the press invention will be described with reference to FIGURES 3a and 3b, and FIGURE 4.

FIGURE 3a shows the relationship between keywords and data stored in the data-storing unit 14. In FIGURE 3a, an item "a" and an item "b" are data, each of which was input at different instants as a fragment of information. The content of the item "a" represents, for example, that "Mr. A works for the company X.", and the keywords thereof are "A" and "X". The content of the item "b" represents that "The phone number of the company X is MMM-NNNN.", and the keyword thereof is X. FIGURE 3b shows the changes in flag-adding within the flag memory 19. In FIGURE 3b, the states of flags will change as shown in the direction of the arrows. Here, retrieval operations in the case when the user inputs the keyword A to obtain the phone number of Mr. A will be described.

FIGURE 4 is a flow chart illustrating the operations of the above-described data retrieval apparatus. First, the keyword "A" is input (Step 1). The thus input keyword "A" is fed through the data retrieval-controlling unit 15 into the keyword memory 18 of the relational data extraction-controlling unit 16 (Step 2). Next, the unit 15 initialises all the flags, which have been added to respective data stored in the data-storing unit 14, into a "0" state (Step 3). Specifically, FIGURE 3b shows the content of the flag memory 19 of FIGURE 2. Thus in Step 3, when all the flags are changed from "1" to "0", i.e., when the content of the flag memory 19 is reset to "0", the preparation for the subsequent retrieval procedures is completed. Next, the data retrieval-controlling unit 15 retrieves the item "a" of FIGURE 3a having the keyword "A" which has been stored in the keyword memory 18 (Step 4).

After the retrieval of the item "a", the flag is changed from "0" to "1" in response to the item "a" (Step 5). This change of the flag is executed by writing "1" into a portion corresponding to the item "a", as shown in FIGURE 3b, indicating that the corresponding item has been extracted. Thereafter, keywords associated with the item "a" are extracted by the keyword-extracting unit 17. The unit 15 judges whether or not the thus extracted keywords include keywords other than the designated keyword "A" (Step 6).

In this case, the keyword X is included as the keyword of the item "a" besides the keyword "A". Thus, the keywords "A" and "X" are stored in the keyword memory 18 (Step 7). The operations of Step 4 through Step 7 are continuously performed until all the data having the keyword "X" are extracted (Step 8). After the continuous retrieval of the keyword "X" in Step 8, the item "b" of FIGURE 3a can be extracted. As a result, a flag in the flag memory 19, which corresponds to the item "b" is changed from "0" to "1". As described above, the apparatus of this invention retrieves data on the basis of the keyword "A". As a result, the item "a" is extracted. Thereafter, the apparatus examines whether or not the item "a" includes any other keywords besides the keyword "A". In the above-described example, the apparatus detects the existence of the keyword "X". Next, the apparatus retrieves data on the basis of the keyword "X", and obtains the item "b". Each time the apparatus obtains the item "a" or the item "b" on the basis of the keyword "A" or the keyword "X", the apparatus changes the flags, each corresponding to each item from "0" to "1". This allows the apparatus to distinguish the data to be output from other data. After the completion of the prescribed data retrieval, the display unit 12 displays the data "a" and "b" to which flags are added as the result of retrieval (Step 9).

In the above-described operations, the item "b" which does not have the keyword "A" can be automatically retrieved. Specifically, by designating only the keyword "A", the item "b" can be retrieved as one of the relational data of the item "a". As a result, the phone number of Mr. A can be obtained.

In the above-described embodiment, the retrieval operations of relational data are performed twice. Specifically, the second retrieval is performed on the basis of the keyword "X" included in the item "a" which has been extracted by the first retrieval. However, this invention is not limited to this, but the retrieval operations of relational data may also be performed three times or more, if required. For example, the third retrieval can be performed on the basis of a keyword other than the keyword "X" included in the datum "b" which has been extracted by the second retrieval. This can cause the relaxation of a condition in which retrieval operations are ended. As a result, relational data can be extracted from a wider range of information.

To the contrary, when such a condition is determined to be more strict, the relational keywords are extracted only from the data in which all the plural designated keywords are included. Further, in the strict condition, the data, which include the extracted relational data as representative keywords, are retrieved. Moreover, the data, which include only the corresponding relational keywords as keywords, are retrieved.

Further, in this embodiment, flags are added correspondingly to the retrieved data. However, pointers (address information), which correspond to data to be retrieved, may also be stored. This allows that when the retrieved data are output, all the data are not required to be processed. As a result, higher processing speed of the data retrieval apparatus can be achieved.

Moreover, the present invention can be applied to an apparatus in which prescribed keywords have been stored corresponding to particular data. In addition, the present invention can also be applied to a data base in which prescribed keywords are automatically extracted.

As described above, in the apparatus of this invention, the prescribed retrieval operations can be performed on the basis of not only the designated keywords, but also the relational keywords. This means that even when such relational keywords are not actually designated, the relational data can be widely retrieved. As a result, all the required data can be extracted completely without an increase in user's burden. Therefore, in the apparatus of this invention, the required retrieval operations can be performed easily and efficiently.

Obviously, numerous additional modifications and variations of the present invention are possible in light of the above teachings. It is therefore to be understood that within the scope of the appended claims, the invention may be practiced otherwise than as specifically described herein.

## Claims

1. A relational data retrieval apparatus, comprising:
data storing means (14) for storing a plurality of data items and keywords corresponding to each item, wherein at least one item has a prescribed relationship to another item and plural keywords correspond to the at least one item;
input means (11) for entering a first keyword corresponding to a first item which a user wishes to retrieve;
data retrieval means (15) for retrieving the first item from the plurality of data stored in said data storing means (14) in accordance with the first keyword; characterised by;
flag memory means (19) for storing a flag corresponding to each item stored in said data storing means (14), in which the flag is changed from a first state to a second state when the corresponding item is retrieved by said data retrieval means (15);
keyword extracting means (17) for extracting a second keyword contained in the said first item retrieved by said data retrieval means (15);
the data retrieval means (15) being arranged to retrieve a further item stored in said data storing means (14) in accordance with the second keyword, the corresponding flag then being changed from the first to the second state; and
display means (12) for displaying all the data items whose respective flags have been set into the second state.

2. A relational data retrieval apparatus according to claim 1, further comprising keyword memory means (18) for storing the first keyword and the second keyword in order, wherein said data retrieval means (15) retrieves an item in accordance with the keyword stored in said keyword memory means (18).

3. A relational data retrieval apparatus according to claim 1,
wherein said data retrieval means (15) initialises all the flags in said flag memory means (19) to the first state, before said data retrieval means (15) retrieves the first item.

4. A relational data retrieval apparatus according to claim 3,
wherein the first state is a "0" state and the second state is a "1" state.

5. A relational data retrieval apparatus according to claim 1,
wherein said keyword extracting means (17) is arranged to extract a third keyword in addition to the said second keyword corresponding to the second item, and
wherein said data retrieval means (15) retrieves a third item stored in said data stored means (14) in accordance with the third keyword.

6. A relational data retrieval apparatus according to claim 5,
wherein said keyword extracting means (17) extracts the third keyword in case that the second item includes both the first keyword, and the second keyword.

## Patentansprüche

1. Relationale Datenwiederauffindungsvorrichtung mit:
Datenspeichermitteln (14) zum Speichern einer Anzahl von Datenteilen und Schlüsselwörtern, die mit jedem Datenteil korrespondieren, wobei mindestens ein Teil einen festgelegten Bezug zu einem anderen Teil hat und eine Mehrzahl von Schlüsselwörtern mit dem mindestens einen Teil korrespondiert;
Eingabemitteln (11) zum Eingeben eines ersten Schlüsselwortes, das mit einem ersten Teil korrespondiert, das ein Benutzer wiederauffinden möchte;
DatenwiederauffindungsmitteIn (15) zum Wiederauffinden des ersten Teils aus einer Anzahl von Daten, die in den Datenspeichermitteln (14) gemäß dem ersten Schlüsselwort gespeichert sind; **gekennzeichnet durch:**
Markierungsspeichermittel (19) zum Speichern einer Markierung, die mit jedem Teil korrespondiert, der in den Datenspeichermitteln (14) gespeichert ist, in denen die Markierung von einem ersten Zustand in einen zweiten Zustand geändert wird, wenn der korrespondierende Teil von den Datenwiederauffindungsmitteln (15) wiederaufgefunden wird;
Schlüsselwort-Gewinnungsmitteln (17) zum Gewinnen eines zweiten Schlüsselwortes, das in dem ersten Teil enthalten ist, das von den Datenwiederauffindungsmitteln (15) wiederaufgefunden wurde;
wobei die Datenwiederauffindungsmittel (15) zum Wiederauffinden eines weiteren Teils angeordnet sind, der in den Datenspeichermitteln (14) gemäß dem zweiten Schlüsselwort gespeichert ist, wobei die entsprechende Markierung dann von dem ersten in den zweiten Zustand geändert wird; und mit
Anzeigemitteln (12) zum Anzeigen aller Datenteile, deren entsprechende Markierungen in den zweiten Zustand gesetzt wurden.

2. Relationale Datenwiederauffindungsvorrichtung nach Anspruch 1, weiterhin mit Schlüsselwort-Speichermitteln (18) zum Speichern des ersten Schlüsselwortes und des zweiten Schlüsselwortes der Reihe nach, wobei die Datenwiederauffindungsmittel (15) einen Teil gemäß dem Schlüsselwort wiederauffindet, der in den Schlüsselwort-Speichermitteln (18) abgespeichert ist.

3. Relationale Datenwiederauffindungsvorrichtung nach Anspruch 1,
wobei die Datenwiederauffindungsmittel (15) anfänglich alle Markierungen in den Markierungsspeichermitteln (19) auf den ersten Zustand setzen, bevor die Datenwiederauffindungsmittel (15) den ersten Teil wiederauffinden.

4. Relationale Datenwiederauffindungsvorrichtung nach Anspruch 3,
wobei der erste Zustand ein "0"-Zustand und der zweite Zustand ein "1"-Zustand ist.

5. Relationale Datenwiederauffindungsvorrichtung nach Anspruch 1,
wobei die Schlüsselwort-Gewinnungsmittel (17) angeordnet sind, um ein drittes Schlüsselwort zusätzlich zu dem zweiten Schlüsselwort zu gewinnen, das mit dem zweiten Teil korrespondiert, und
wobei die Datenwiederauffindungsmittel (15) einen dritten Teil wiederauffinden, der in den Datenspeichermitteln (14) gemäß dem dritten Schlüsselwort gespeichert ist.

6. Relationale Datenwiederauffindungsvorrichtung nach Anspruch 5,
wobei die Schlüsselwort-Gewinnungsmittel (17) das dritte Schlüsselwort in dem Fall gewinnen, in dem der zweite Teil sowohl das erste Schlüsselwort als auch das zweite Schlüsselwort enthält.

## Revendications

1. Dispositif relationnel de recherche de données, comprenant :
des moyens de stockage de données (14) destinés à stocker une pluralité d'éléments de données et de mots-clés correspondant à chaque élément, dans lesquels au moins un élément a une relation prescrite avec un autre élément et dans lesquels plusieurs mots-clés correspondent à au moins un élément ;
des moyens d'entrée (11) destinés à entrer un premier mot-clé correspondant à un premier élément qu'un utilisateur désire rechercher ;
des moyens de recherche de données (15) destinés à rechercher le premier élément parmi la pluralité de données stockées dans lesdits moyens de stockage de données (14) conformément au premier mot-clé ;
caractérisé par :
des moyens de mémoire d'indicateurs (19) destinés à stocker un indicateur correspondant à chaque élément stocké dans lesdits moyens de stockage de données (14), dans lesquels l'indicateur est passé d'un premier état à un second état lorsque l'élément correspondant est recherché par lesdits moyens de recherche de données (15) ;
des moyens d'extraction de mot-clé (17) destinés à extraire un second mot-clé contenu dans ledit premier élément recherché par lesdits moyens de recherche de données (15) ;
les moyens de recherche de données (15) étant agencés pour rechercher un élément supplémentaire stocké dans lesdits moyens de stockage de données (14) conformément au second mot-clé, l'indicateur correspondant étant alors passé du premier état au second état ; et
des moyens d'affichage (12) destinés à afficher tous les éléments de données dont les indicateurs respectifs ont été positionnés dans le second état.

2. Dispositif relationnel de recherche de données selon la revendication 1, comprenant de plus des moyens de mémoire de mot-clés (18) destinés à stocker le premier mot-clé et le second mot-clé dans l'ordre, dans lequel lesdits moyens de recherche de données (15) recherchent un élément conformément au mot-clé stocké dans lesdits moyens de mémoire de mot-clés (18).

3. Dispositif relationnel de recherche de données selon la revendication 1, dans lequel lesdits moyens de recherche de données (15) initialisent tous les indicateurs dans lesdits moyens de mémoire d'indicateurs (19) dans le premier état, avant que lesdits moyens de recherche de données (15) ne récupèrent le premier élément.

4. Dispositif relationnel de recherche de données selon la revendication 3, dans lequel le premier état est un état "O" et le second état est un état "1".

5. Dispositif relationnel de recherche de données selon la revendication 1, dans lequel lesdits moyens d'extraction de mot-clé (17) sont agencés pour extraire un troisième mot-clé en plus dudit second mot-clé correspondant au second élément, et dans lequel lesdits moyens de recherche de données (15) récupèrent un troisième élément stocké dans lesdits moyens de stockage de données (14) conformément au troisième mot-clé.

6. Dispositif relationnel de recherche de données selon la revendication 5, dans lequel lesdits moyens d'extraction de mot-clé (17) extraient le troisième mot-clé dans le cas où le second élément comprend à la fois le premier mot-clé et le second mot-clé.
